# EUROPEAN PATENT APPLICATION

(11) **EP 4 350 429 A1**
(43) Date of publication of application: **10.04.2024**
(21) Application number: 22816401.8
(22) Date of filing: 27.05.2022
(51) Int. Cl.: G02F 1/1337, G02B 5/30, G02F 1/1335, G02F 1/1343, G02F 1/1339

(54) **OPTICAL LAMINATE, METHOD FOR MANUFACTURING SAME, SMART WINDOW COMPRISING SAME, AND WINDOW FOR VEHICLE OR BUILDING APPLYING SAME**

(30) Priority: 04.06.2021 KR 20210072871
(71) Applicant: Dongwoo Fine-Chem Co., Ltd., Iksan-si, Jeollabuk-do 54631 (KR)
(72) Inventor: KIM, Dong-Hwi, Sejong 30100 (KR); LEE, Yu-Jin, Goyang-si, Gyeonggi-do 10249 (KR); PARK, Jang-Soon, Seongnam-si, Gyeonggi-do 13261 (KR)
(74) Representative: Betten & Resch
(86) International application number: PCT/KR2022/007595
(87) International publication number: WO 2022/255742

(57) **Abstract**

Disclosure relates to a transmittance variable optical laminate, a method for manufacturing the same, a smart window including the same, and a window and a door for a vehicle or a building applying the same, the optical laminate including a polarizing plate laminated on each of both surfaces of a liquid crystal layer, the liquid crystal layer being driven depending on an electric field, wherein the polarizing plate includes a polarizer and a first protective layer having the length longer than the polarizer and laminated on a first surface of the polarizer and a second protective layer laminated on a second surface thereof, and a transparent conductive layer is formed by directly contacting with the polarizing plate, and total light transmittance of the optical laminate is changed in response to voltage application.

## Description

### Technical Field

The present disclosure relates to a transmittance variable optical laminate, a method for manufacturing the same, a smart window including the same, and a window and a door for a vehicle or a building applying the same.

### Background Art

In general, there are many cases in which an external light blocking coating is applied to a window of a means of transportation such as a vehicle. However, the transmittance of a conventional window of a means of transportation is fixed, and the transmittance of the external light blocking coating is also fixed. Therefore, the entire transmittance of the conventional window of the means of transportation is fixed, thereby causing an accident. For example, when the entire transmittance is preset low, there is no problem during day when ambient light is sufficient. However, there is a problem in that it is difficult for a driver or the like to properly check the surroundings of the means of transportation at night when ambient light is insufficient. Alternatively, when the entire transmittance is preset high, there is a problem of causing glare to a driver or the like during day when ambient light is sufficient. Accordingly, a transmittance variable optical laminate capable of changing the transmittance of light when a voltage is applied has been developed.

The transmittance variable optical laminate is driven by changing the transmittance by driving liquid crystal according to voltage application. The transmittance variable optical laminate developed so far is manufactured by patterning and forming a conductive layer for driving liquid crystal on a separate substrate, and then combining the conductive layer with other elements such as a polarizing plate.

For example, Japanese Patent Publication Application No. 2018-010035 discloses a transmittance variable optical laminate including a transparent electrode layer formed on a polycarbonate (PC) substrate having a predetermined thickness.

However, when a separate or additional substrate is included to form the conductive layer as described above, as a manufacturing process becomes complicated, manufacturing costs is increased, the thickness of the laminate is increased, and the transmittance is changed due to occurrence of phase difference.

Accordingly, there is a need to develop a transmittance variable optical laminate capable of simplifying a manufacturing process, reducing the thickness by not including a separate substrate for forming a conductive layer.

### [Document of related art]

(Patent Document 1) Japanese Patent Application Publication No. 2018-010035

### Disclosure

### Technical Problem

The present disclosure is intended to provide a transmittance variable optical laminate with simplified manufactured process by not including a separate substrate for forming a conductive layer.

Another objective of the present disclosure is to provide a transmittance variable optical laminate in which the thickness is significantly reduced by no including a separate or additional substrate for forming a conductive layer.

Yet another objective of the present disclosure is to provide a transmittance variable optical laminate configured to improve sealing performance and waterproofness to reduce deterioration of the liquid crystal layer.

Yet another objective of the present disclosure is to provide a smart window including the transmittance variable optical laminate, and a vehicle or building window to which the same is applied.

However, the problem to be solved by the present disclosure is not limited to the problems mentioned above, and other problems not mentioned will be clearly understood by those skilled in the art from the description below.

### Technical Solution

The present disclosure relates to a transmittance variable optical laminate including: a polarizing plate laminated on each of opposite surfaces of a liquid crystal layer located therebetween, the liquid crystal layer being operated in response to an electric field, wherein the polarizing plate includes a polarizer, and a first protective layer having length longer than the polarizer and laminated on a first surface of the polarizer and a second protective layer laminated on a second surface of the polarizer, a transparent conductive layer is formed by directly contacting with the polarizing plate, and total light transmittance of the optical laminate is variable in response to voltage application.

In a first aspect of the present disclosure, the first protective layer may be provided at an outer portion of the polarizer.

In a second aspect of the present disclosure, last ends of two different first protective layers respectively included in the polarizing plate and another polarizing plate laminated on the opposite surfaces of the liquid crystal layer may be sealed.

In a third aspect of the present disclosure, the first protective layer may include thermoplastic resin.

In a fourth aspect of the present disclosure, the thermoplastic resin may include one or more kinds selected from a group consisting of polyester-based resin, cellulose-based resin, polycarbonate-based resin, acryl-based resin, styrene-based resin, polyolefin-based resin, vinyl chloride-based resin, amide-based resin, imide-based resin, sulfone-based resin, polyethersulfone-based resin, polyether ether ketone-based resin, polyphenylene sulfide-based resin, vinyl alcohol-based resin, vinylidene chloride-based resin, vinyl butyral-based resin, arylate-based resin, polyoxymethylene-based resin, and epoxy-based resin.

In a fifth aspect of the present disclosure, the first protective layer may have a thickness less than or equal to 80µm.

In a sixth aspect of the present disclosure, the transmittance variable optical laminate may include: a coating layer formed on at least one surface of the first protective layer.

In a seventh aspect of the present disclosure, the second protective layer may be a protective film or an optical functional film.

In an eighth aspect of the present disclosure, the optical functional film may be a retardation film.

In a ninth aspect of the present disclosure, the transparent conductive layer may be formed by directly contacting with the polarizing plate without a separate substrate or base material between the polarizing plate and the transparent conductive layer.

In a tenth aspect of the present disclosure, the transparent conductive layer may be formed by directly contacting with the polarizing plate with a highly adhesive layer between the polarizing plate and the transparent conductive layer.

In an eleventh aspect of the present disclosure, the transparent conductive layer may include one or more kinds selected from a group consisting of transparent conductive oxide, metal, carbonaceous matters, conductive polymers, conductive ink, and nanowires.

In a twelfth aspect of the present disclosure, the transmittance variable optical laminate may include: a refractive index-matching layer (IML; index matching layer) having a refractive index of 1.4 to 2.6.

In a thirteenth aspect of the present disclosure, the polarizing plate may have a thickness of 30 to 200µm.

In a fourteenth aspect of the present disclosure, the liquid crystal layer may be driven by any one driving method selected from a group consisting of twisted nematic (TN), super-twisted nematic (STN), in-plane switching (IPS), fringe field switching (FFS), plane line switching (PLS), advanced high-performance IPS (AH-IPS), polymer sustained alignment (PSA), and vertical alignment (VA).

In a fifteenth aspect of the present disclosure, the liquid crystal layer may include one or more kinds selected from a group consisting of a ball spacer and a column spacer.

In a sixteenth aspect of the present disclosure, the ball spacer may have a diameter of 1 to 10 µm.

In a seventeenth aspect of the present disclosure, the ball spacer may have an occupancy area in the liquid crystal layer of 0.01% to 10% of the area of the liquid crystal layer.

Furthermore, the present disclosure relates to a method for manufacturing a transmittance variable optical laminate.

Furthermore, the present disclosure relates to smart window including a transmittance variable optical laminate.

Furthermore, the present disclosure relates to a vehicle in which a smart window is applied to at least one of a front window, a rear window, a side window, a sunroof window, and an inner partition thereof.

Furthermore, the present disclosure relates to window and a door for a building, the window and the door including a smart window.

### Advantageous Effects

The transmittance variable optical laminate according to the present disclosure does not include a separate or additional substrate for forming the conductive layer as the conductive layer is directly formed on one surface of the polarizing plate, so that the thickness thereof may be significantly reduced in comparison to the thickness of the conventional optical laminate.

Furthermore, the transmittance variable optical laminate according to the present disclosure is configured to omit the process of forming a conductive layer on a separate substrate for the conventional optical laminate and bonding the conductive layer and other members, so the manufacturing process thereof can be simplified in comparison to the convention optical laminate.

Furthermore, the transmittance variable optical laminate according to the present disclosure is configured to improve sealing performance and waterproofness, so that deterioration of the liquid crystal layer can be improved compared to the conventional optical laminate and the product life can be extended.

### Description of Drawings

FIG. 1 is a view showing a laminate structure of a transmittance variable optical laminate according to an embodiment of the present disclosure.
FIG. 2 is a view showing a laminate structure of a transmittance variable optical laminate to which a second layer is coupled according to another embodiment of the present disclosure.
FIG. 3 is a view showing a laminate structure of a transmittance variable optical laminate to which a second layer is coupled according to another embodiment of the present disclosure.
FIG. 4 is a view showing a laminating structure of a transmittance variable optical laminate in which a pressure sensitive adhesive according to another embodiment of the present disclosure is formed on one surface thereof.
FIG. 5 is a view showing a laminate structure of a transmittance variable optical laminate to which a second layer is coupled according to another embodiment of the present disclosure.
FIG. 6 is a view schematically showing steps of manufacturing a polarizing plate according an embodiment of the present disclosure.
FIG. 7 is a view schematically showing a process of forming the transmittance variable optical laminate by forming a conductive layer on the polarizing plate according to the embodiment of the present disclosure.
FIG. 8 is a view schematically showing a process of forming a transmittance variable optical laminate to which a second layer is coupled according to another embodiment of the present disclosure.
FIG. 9 is a view schematically showing a process of forming a transmittance variable optical laminate to which a second layer is coupled according to another embodiment of the present disclosure.
FIG. 10 is a view schematically showing a process of forming a transmittance variable optical laminate to which a second layer is coupled according to another embodiment of the present disclosure.

### Mode for Invention

The present disclosure relates to a transmittance variable optical laminate, wherein since a conductive layer for driving liquid crystal is directly formed on one surface of a polarizing plate, the optical laminate does not include a separate or additional substrate or base material for forming the conductive layer.

More particularly, the present disclosure relates to a transmittance variable optical laminate, the optical laminate including a polarizing plate laminated on one surface or both surfaces thereof with a liquid crystal layer driven depending on an electric field, wherein the polarizing plate includes a polarizer and a first protective layer having the length longer than the polarizer and laminated on one surface of the polarizer and a second protective layer laminated on a second surface of the polarizer, and a transparent conductive layer is formed by directly contacting with the polarizing plate, and total light transmittance of the optical laminate is changed in response to applying voltage.

The transmittance variable optical laminate of the present disclosure is particularly suitable for technical fields where light transmittance can be changed in response to application of voltage, for example, may be used for a smart window.

The smart window means a window controlling the amount of light or heat passing through the window by changing light transmittance in response to an electrical signal. In other words, the smart window is provided to be changed into a transparent, opaque or translucent state by voltage and is called variable transmittance glass, lighting control glass, or smart glass.

A smart window may be used as a partition for partitioning the internal space of a vehicle and a building or as a partition for privacy, and may be used as a skylight window arranged at an opening of a building. Furthermore, the smart window may be used as highway signs, notice boards, score boards, clocks or advertisement screens, and may be used to replace windows of vehicles, buses, airplanes, ships, or trains or windows of means of transportation, such as a sunroof.

The transmittance variable optical laminate of the present disclosure may also be used for the smart window of the various technical fields mentioned above, but since the transparent conductive layer is directly formed in the polarizing plate, there is no need to include a separate substrate for forming the transparent conductive layer and the thickness thereof is thin and is advantageous in the flexuosity, so the optical laminate of the present disclosure may be used to be particularly suitable for a smart window of a vehicle or a building. According to one or a plurality of embodiments, the smart window to which the transmittance variable optical laminate of the present disclosure is applied may be used for front windows, rear windows, side windows, and sunroof windows of a vehicle, or windows and doors for a building. Furthermore, the smart window may be used to not only an external light blocking use, but also an internal space partitioning use or a privacy protecting use such as an inner partition for a vehicle or a building.

Hereinbelow, embodiments of the present disclosure will be described in detail with reference to drawings. However, the following drawings accompanied to this specification illustrate preferred embodiments of the present disclosure, and serve to further understand the technical idea of the present disclosure with the contents of the above-described invention. Therefore, the present disclosure should not be construed as being limited to matters described in the drawings.

Terms used in this specification are selected to describe embodiments and thus does not limit the present disclosure. In this specification, an element expressed in a singular form may be plural elements unless it is necessarily singular in the context.

As used herein, terms "comprise" and/or "comprising" do not mean exclusion of the presence or absence of one or more components, steps, movements and/or elements other than a component, a step, movement, and/or an element mentioned above. The same reference numerals are used throughout the specification to designate the same or similar elements.

Spatially relative terms ^{┌}below_{┘} - ^{┌}lower surface_{┘} - ^{┌}lower portion_{┘}, ^{┌}above_{┘} - ^{┌}upper surface_{┘} - ^{┌}upper portion_{┘} may be used to easily describe correlation between "one element or components" and "another element or other components", as shown in drawings. The spatially relative terms should be understood as terms including different directions of an element when being used or operated in addition to a direction shown in the drawings. For example, when an element shown in the drawings is turned over, the element described as being ^{┌}below_{┘} or ^{┌}lower_{┘} with respect to another element may be placed ^{┌}on_{┘} the another element. Accordingly, the exemplary term ^{┌}below_{┘} may include both downward and upward directions. An element may be aligned in a different direction, and accordingly, the spatially relative terms may be interpreted according to orientation.

The ^{┌}planar direction_{┘} used in this specification may be interpreted as a direction perpendicular to a polarizing plate and/or a transparent conductive layer, that is, a direction viewed from the user's view side.

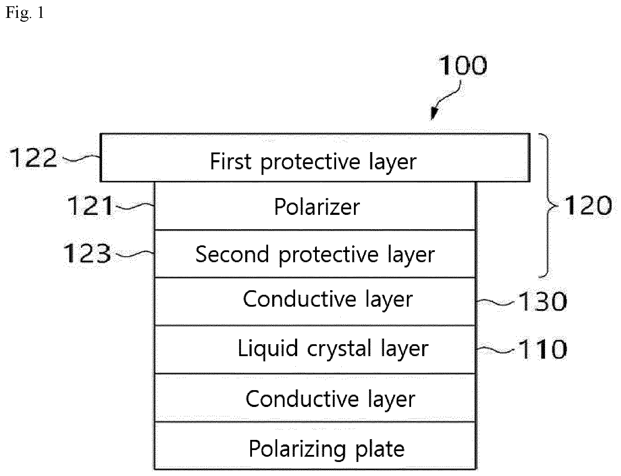

FIG. 1 is a view showing a laminate structure of a transmittance variable optical laminate 100 according to an embodiment of the present disclosure.

Referring to FIG. 1, according to the embodiment of the present disclosure, the transmittance variable optical laminate 100 includes a liquid crystal layer 110, a polarizing plate 120, and a transparent conductive layer 130. The polarizing plate 120 may include a polarizer 121, a first protective layer 122, and a second protective layer 123. According to the embodiment of the present disclosure, total light transmittance of the transmittance variable optical laminate 100 may vary in response to voltage application. For example, total light transmittance of the optical laminate 100 may be between 5 to 45% in response to voltage application.

The liquid crystal layer 110 is characterized to be driven in response to an electric field. The liquid crystal layer 110 may be located between a first polarizing plate and a second polarizing plate that are located in a light control region of the optical laminate 100. According to the embodiment, the liquid crystal layer 110 may be located in a space provided by a sealant layer (not shown) and a spacer (not shown) provided between a first polarizing plate and a second polarizing plate in the light control region. Furthermore, the liquid crystal layer 110 may adjust transmittance of light incident from an external light source in response to an electric field formed between a first transparent conductive layer and a second transparent conductive layer.

According to one or a plurality of embodiments, the liquid crystal layer 110 may be driven by any one driving method selected from a group consisting of TN (Twisted nematic), STN (Super-twisted nematic), IPS (In-plane switching), FFS (Fringe field switching), PLS (Plane line switching), AH-IPS (Advanced high-performance IPS), PSA (Polymer sustained alignment), and VA (Vertical alignment), and a driving method for a liquid crystal developed before or later may be applied thereto.

According to another embodiment of the present disclosure, the liquid crystal layer 110 may include one or more kinds of spacers selected from a group consisting of a ball spacer and a column spacer, and specifically, it is preferable that the included space is a ball spacer. The ball spacer may include one or more ball spaces, and preferably has a diameter of 1 to 10 µm. Furthermore, when viewed in a planar direction, a region where the ball spacer is occupied in the liquid crystal layer 110 (i.e., light control region) is preferably 0.01 to10% of the area of the liquid crystal layer 110 in an aspect of improvement of user's visibility and transmittance in a light transmissive mode.

The polarizing plate 120 may transmit sporadically poured light in one direction, and may regulate the amount of light passing through the polarizing plate 120 by using polarization properties thereof to adjust the transmittance of the optical laminate.

The polarizing plate 120 may include the polarizer 121, the first protective layer 122, and the second protective layer 123. For example, the first protective layer 122 and the second protective layer 123 may be respectively laminated on both surfaces of the polarizer 121.

The first protective layer 122 is characterized as being longer than the length of the polarizer 121 and sealing performance and waterproofness may be improved through the sealing effect. The sealing performance and waterproofness is improved through the first protective layer 122 having the length longer than the polarizer 121, so that the life of the optical laminate can extend through improvement of deterioration of the liquid crystal layer 110. More specifically, the first protective layer 122 is provided at the outside part of the polarizer 121 of the polarizing plate 120 provided on a front surface of the liquid crystal layer 110, and may improve the sealing performance and waterproofness through sealing together with another first protective layer provided at the outside part of the polarizer of the polarizing plate provided on a rear surface of the liquid crystal layer 110. The outside part may mean one surface in a direction where the liquid crystal layer is not provided based on the polarizer. In other words, according to the embodiment of the present disclosure, the optical laminate may be laminated in an order of the first protective layer, the polarizer, the second protective layer, the transparent conductive layer, the liquid crystal layer, the transparent conductive layer, the second protective layer, the polarizer, the first protective layer, and last ends of two different first protective layer may be sealed.

The first protective layer 122 is not particularly limited, but in aspect of sealing performance and improvement of processability, it is preferable that the first protective layer 122 contains the thermoplastic resin.

The thermoplastic resin can be changed in shape by applying heat again even after the resin has been molded by applying heat, and has the advantage of being able to be efficiently processed by extrusion molding or injection molding.

In one or a plurality of embodiments, the thermoplastic resin may contain one or more kinds selected from a group consisting of polyester-based resins such as polyethylene terephthalate, polyethylene isophthalate, polyethylene naphthalate, polybutylene terephthalate, etc.; cellulose-based resins such as cellulose diacetate, cellulose triacetate, etc.; polycarbonate-based resins; acryl-based resins such as polymethyl (meth) acrylate, polyethyl (meth) acrylate, etc.; styrene-based resins such as polystyrene, acrylonitrile-styrene copolymer, etc.; polyolefin-based resins such as polyethylene, polypropylene, cyclo-based or with norbornene-structured polyolefin, ethylene propylene copolymer, etc.; vinyl chloride-based resins; amide-based resins such as nylon, aromatic polyamide, etc.; imide-based resins; sulfone-based resins; polyethersulfone-based resins; polyether ether ketone-based resins; polyphenylene sulfide-based resins; vinyl alcohol-based resins; vinylidene chloride-based resins; vinyl butyral-based resins; arylate-based resins; polyoxymethylene-based resin, and epoxy-based resins.

The first protective layer 122 may have the thickness less than or equal to 80µm and, preferably, the thickness of from 10 to 80µm and, more preferably, the thickness of 20 to 60µm. In this case, the polarizing plate 120 may enable formation of the optical laminate having a thin thickness while maintaining the optical characteristic.

The second protective layer 123 may be formed to face the first protective layer 122 with the polarizer 121 located therebetween, but is not necessarily limited thereto, and may include one or more second protective layers. For example, the second protective layer may only be provided on one surface of the polarizer, and may be provided on both surfaces of the polarizer. When the second protective layer includes a plurality of protective layers, the plurality of second protective layers protective layers may be used in a multi-stage structure in which one or more second protective layers are successively laminated, and at this point, two different second protective layers may have substantially the same or similar properties.

The second protective layer may be a protective film to preserve the characteristics of polarization of the polarizer from a post-processing and external environment or an optical functional film to complement the optical characteristics of the optical laminate, and the protective layer may serve to provide a structural base in which the transparent conductive layer 130 to be described below may be formed. At this point, the second protective layer may preferably have the properties that facilitate formation of the transparent conductive layer 130.

The protective layer may be substantially the same as the first protective layer described above, but is not necessarily limited thereto, and is not particularly limited as long as the protective layer is a material that can perform the protective function of the polarizer. For example, the protective film may include one or more kind selected from a group consisting of polyester resin such as polyethylene terephthalate (PET), polyethylene isophthalate (PEI), polyethylene naphthalate (PEN), polybutylene terephthalate (PBT), etc.; cellulose resin such as diacetyl cellulose, triacetyl cellulose (TAC), etc.; polycarbonate (PC) resin; polyethylene (PE) resin; polypropylene (PP) resin; acrylic resin such as polymethyl acrylate (PMA), polymethyl methacrylate (PMMA), polyethyl acrylate (PEA), polyethyl methacrylate (PEMA), etc.; and cyclic olefin polymer (COP).

According to the embodiment, the optical functional film is not particularly limited as long as it can reinforce or supplement the optical function of the polarizing plate 120. For example, in order to delay the phase of light passing through the liquid crystal layer, the optical functional layer may be a phase retardation film such as a quarter-wave plate (1/4 wave plate), a half-wave plate (1/2 wave plate), and may be used alone or in combination.

The retardation film may be a polymer stretched film or a liquid crystal polymerized film, formed by stretching a polymer film that can impart optical anisotropy by stretching in an appropriate manner.

The description of the protective film may be equally applied to the polymer stretched film and, for example, the polymer stretched film may use a polymer layer including: polyolefin such as polyethylene (PE) or polypropylene (PP), etc. ; cyclo olefin polymer (COP) such as, polynorbornene, etc.; polyester such as polyvinyl chloride (PVC), polyacrylonitrile (PAN), polysulfone (PSU), acryl resin, polycarbonate (PC), polyethylene terephthalate (PET), etc.; and/or cellulose ester polymer such as polyacrylate, polyvinyl alcohol (PVA), triacetyl cellulose (TAC), etc., or a copolymer of two or more monomers among monomers that can form the polymers.

An obtaining method of the polymer stretched film is not particularly limited and, for example, may be obtained by forming the polymer material into a film shape and then stretching the material. The molding method for the film shape is not particularly limited, and the polymer stretched film may be formed in the known methods such as injection molding, sheet molding, blow molding, injection blow molding, inflation molding, extrusion molding, foaming molding, cast molding, etc., and may be formed in a secondary processing molding method such as pressure molding, vacuum molding, etc. Among them, extrusion molding and cast molding may be preferably used. At this point, for example, an unstretched film may be extruded by using an extruder to which a T-die, a circular die, etc., may be mounted. When a molded product is obtained in extrusion molding, a material made by melt-kneading various resin components, additives, etc., in advance, may be used and the molded product may be formed by melt-kneading during extrusion molding. Furthermore, various resin components are dissolved by using common solvent, for example, solvent such as chloroform, 2 methylene chloride, and then is solidified in a cast dry manner, and accordingly the non-stretched film may be cast-molded.

The polymer stretched film may be provided by performing uniaxial stretching with respect to the molded film in a mechanical direction (MD, longitudinal or length direction), and by performing uniaxial stretching in a direction (TD, transverse direction or width direction) perpendicular to the MD, and furthermore, the molded film is stretched in a sequential biaxial stretching method of roll stretching and tenter stretching, a simultaneous biaxial stretching method of tenter stretching, a biaxial stretching method of tubular stretching, etc., so that a biaxial stretched film may be manufactured.

The liquid crystal polymerized film may contain reactive liquid crystal compound in a polymerized state. The reactive liquid crystal compound may mean a compound, for example, containing a mesogen frame, etc., and also containing one or more polymerizable functional groups. The reactive liquid crystal compound may be variously known by the name reactive mesogen (RM). The reactive liquid crystal compound may constitute a cured film with polymer network formed while being polymerized by light or heat and maintaining liquid crystal arrangement.

The reactive liquid crystal compound may be a mono-functional liquid crystal compound or a multi-functional liquid crystal compound. The mono-functional liquid crystal compound is a compound having 1 polymerizable functional group, and the multi-functional liquid crystal compound may mean a compound having two or more polymerizable functional groups.

In one or a plurality of embodiments, the thickness of the retardation film may be a thickness of10µm to 100µm in the polymer stretched film, and may be a thickness of 0.1µm to 5µm in the liquid crystal polymerized film.

In one or a plurality of embodiments, the optical functional film may be directly formed on one surface of the polarizer, and may be provided on an upper surface of the protective film.

The polarizer of the polarizing plate 120 may include a stretched polarizer, or may be formed into a stretched polarizing plate. According to an embodiment, the elongated polarizer may include a stretched polyvinyl alcoholic (PVA)-based resin. The PVA-based resin may be PVA-based resin obtained by saponifying polyvinyl acetate resin. As the polyvinyl acetate-based resin, in addition to polyvinyl acetate that is homopolymer of vinyl acetate, vinyl acetate and a copolymer with other monomers that can be copolymerized with vinyl acetate. As the other monomers, unsaturated carboxylic acid-based monomers, unsaturated sulfonic acid-based monomers, olefin-based monomers, vinyl ether-based monomers, acrylamide having ammonium groups-based monomers, and the like may be used. Furthermore, the PVA-based resin is denatured, and may be polyvinyl formal or polyvinyl acetal denatured into aldehyde.

Furthermore, the polarizing plate 120 may include a coated polarizer. According to the embodiment, the coated polarizer may be formed by composition for liquid crystal coating. At this point, the composition for liquid crystal coating may contain reactive liquid crystal compound and dichroic dye.

The description of the reactive liquid crystal compound of the retardation film described above may be equally applied to the reactive liquid crystal compound. Therefore, as the reactive liquid crystal compound is used, the polarizer of a thin film shape with improved mechanical and thermal stability while maintaining optically anisotropic or dielectric permittivity property of liquid crystal may be formed.

The dichroic dye is a substance contained in the composition for liquid crystal coating to impart the polarization characteristic, and has a property in which absorbance in a direction of long axis of molecule and absorbance in a direction of short axis. The dichroic dye may adopt a dichroic dye developed before or later. For example, the dichroic dye may contain acridine dye, oxazine dye, cyanin dye, naphthalene dye, azo dye, anthraquinone dye, etc., and these may be used alone or in combination.

The composition for liquid crystal coating may contain a solvent capable of dissolving the reactive liquid crystal compound and the dichroic dye. For example, propylene glycol monomethyl ether acetate (PGMEA), methyl ethyl ketone (MEK), xylene, chloroform, and the like. Furthermore, the composition for liquid crystal coating may contain levelling agents, polymerization initiators, etc. within a range that does not impair the polarization characteristic of a coating film.

Furthermore, the polarizing plate 120 may be formed with a member having orientation. For example, the polarizing plate 120 may be formed by coating and hardening composition for alignment layer coating containing aligned polymers, photopolymerization initiators, and solvent, on the first protective layer 122 and/or the second protective layer 123 to form the member having orientation, then by coating and curing the composition for liquid crystal coating on the member. Although the aligned polymer is not particularly limited, the aligned polymer may be polyacrylate-based resin, polyamic resin, polyimide-based resin, polymer having cinnamate groups, etc. and may use polymer capable of expressing orientation, the polymer may be developed before or later.

According to an embodiment, the polarizing plate 120 may include an overcoat layer. For example, the overcoat layer may be located on an upper surface of a layer formed by the composition for liquid crystal coating and may be provided to face the member having the orientation. According to some embodiments, a protective film may be additionally provided on an upper surface of the overcoat layer. In this case, the polarizing plate may have a laminate structure of a member having orientation-a layer formed by the composition for liquid crystal coating-an overcoat layer-a protective film. Accordingly, the mechanical durability can be further improved while maintaining transmittance at a constant level.

According to an embodiment, the polarizing plate 120 may have a thickness of 30 to 200 µm, and preferably, a thickness of 30 to 170 µm, and more particularly, a thickness of 50 to 150 µm. In this case, while the polarizing plate 120 maintains the optical characteristic, the optical laminate having a thin thickness can be manufactured.

The polarizing plate 120 may have an incurvate shape in order to manufacture the optical laminate having a curved surface, and for example, may be formed to be curved towards either of two different polarizing plates 120 that are laminated on both surfaces of the liquid crystal layer 110.

Furthermore, the two different polarizing plates 120 may be located at both surfaces of the liquid crystal layer 110. In this case, an angle between the absorption axes of the two different polarizing plates 120 may be formed to be vertical or horizontal, and moreover, in order to secure the minimum transmittance, the angle may preferably be formed at an angle of 5 to 85.

Furthermore, the polarizing plate 120 may include a coating layer for improving adhesion with respect to another layer and, preferably, may include a coating layer on at least one surface of the first protective layer 122 and, more particularly, may be provided at an outer surface of the first protective layer 122 to improve adhesion with respect to another layer. Another layer described above may be appropriately selected depending on the user's needs. For example, another layer may include ethylene vinyl acetate (EVA), polyvinyl butyral (PVB), and/or the like.

The transparent conductive layer 130 may be formed on one surface of each polarizing plate 120, and particularly, may be formed in directly contact with the polarizing plate 120.

In the embodiment, the transparent conductive layer 130 means that the transparent conductive layer 130 shares a contact surface with the polarizing plate 120 to be provided on the polarizing plate 120 without a separate substrate or base material. For example, forming the transparent conductive layer 130 in directly contact with the polarizing plate 120 may mean that the transparent conductive layer 130 may be formed by being deposited on the upper surface of the second protective layer 123 formed in the polarizing plate 120. At this point, in order to improve the adhesion between the transparent conductive layer 130 and the polarizing plate 120, the transparent conductive layer 130 may be formed by performing pre-processing such as a corona processing or a plasma processing on one surface of each polarizing plate 120, and then directly contacting with the surface of each polarizing plate to which the pre-processing is performed. The pre-processing is not limited to the corona processing or the plasma processing, and may adopt a pre-processing developed before or later without harming the purpose of the present disclosure.

According to another embodiment of the present disclosure, in order to improve the adhesion between the transparent conductive layer 130 and the polarizing plate 120, the transparent conductive layer 130 may be formed by directly contacting with each polarizing plate with the highly adhesive layer located therebetween, the highly adhesive layer being provided on one surface of each polarizing plate.

The transparent conductive layer 130 is preferably have the transmittance with respect to visible light of 50% or more, and for example, may include one or more kinds selected from a group consisting of transparent conductive oxide, metal, a carbonaceous material, conductive polymer, conductive ink, and nanowires, but the present disclosure is not limited thereto, and a material of a transparent conductive layer developed before or later may be used.

According to one or a plurality of embodiments, the transparent conductive oxide may include one or more kinds selected from a group consisting of indium tin oxide (ITO), indium zinc oxide (IZO), indium zinc tin oxide (IZTO), aluminum zinc oxide (AZO), gallium zinc oxide (GZO), florin tin oxide (FTO), zinc oxide (ZnO), etc. Furthermore, the metal may include one or more kinds selected from a group consisting of aurum (Au), argentum (Ag), cuprum (Cu), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), alloy containing at least one of them, etc., and for example, may include argentum - palladium - cuprum (APC) alloy or cuprum - calcium (CuCa) alloy. The carbonaceous matter may include one or more kinds selected from a group consisting of carbon nanotube (CNT), graphene, etc., and the conductive polymer may include one or more kinds selected from a group consisting of polypyrrole, polythiophene, polyacetylene, PEDOT, polyaniline, etc. The conductive ink may be a mixture of metal powder and curable polymer binder, and the nanowires may be for example silver nanowires (AgNW).

Furthermore, the transparent conductive layer 130 may be formed by combining these matters in a structure of two or more layers. For example, in order to reduce the reflectance of incident light and increase the transmittance, the transparent conductive layer 130 may be formed in a structure of two layers including a metal layer and a transparent conductive oxide.

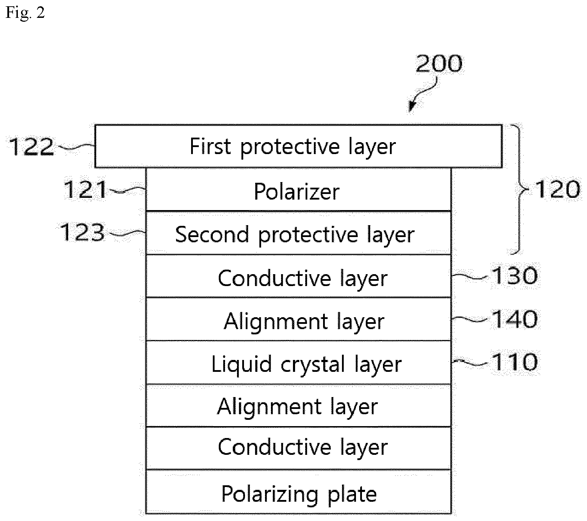

FIG. 2 is a view showing a laminate structure of a transmittance variable optical laminate 200 to which a second layer is coupled according to another embodiment of the present disclosure.

According to the embodiment FIG. 2, an optical laminate 200 includes the liquid crystal layer 110, the polarizing plate 120, the conductive layer 130, and the alignment layer 140 formed on at least one surface of the liquid crystal layer 110. The polarizing plate 120 may include the polarizer 121, the first protective layer 122, and the second protective layer 123.

The alignment layer 140 may have substantially the same characteristics as the above-described member having orientation, and for example, may be formed by applying an aligned matter such as polyimide, etc., and then performing a rubbing process.

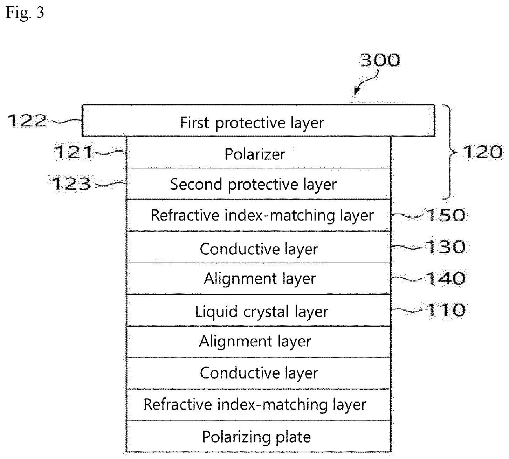

FIG. 3 is a view showing a laminate structure of a transmittance variable optical laminate 300 to which a second layer is coupled according to another embodiment of the present disclosure.

The optical laminate 300 according to the embodiment of FIG. 3 includes the liquid crystal layer 110, the polarizing plate 120, the transparent conductive layer 130, the alignment layer 140, and the refractive index-matching layer 150, and the polarizing plate 120 may include the polarizer 121, a first protective layer 122, and a second protective layer 123.

The refractive index-matching layer 150 is provided to compensate for the difference between transmittance ratios of the optical laminate by the transparent conductive layer 130, and may serve to improve the visible characteristic by reducing the difference of the refractive index. Furthermore, the refractive index-matching layer 150 may be provided to correct a color based on the transparent conductive layer 130. Meanwhile, when the transparent conductive layer 130 has a pattern, the refractive index-matching layer 150 may correct the difference of transmittance ratio between a region with the pattern and a non-pattern region without non pattern.

Specifically, the transparent conductive layer 130 is laminated close to other members having a refractive index different therefrom (for example, the polarizing plate 120, etc.), and due to the difference of the refractive index between the transparent conductive layer 130 and another layer close thereto, the difference of optical transmittance may be caused. Specifically, when a pattern is formed on the transparent conductive layer 130, a problem in that the pattern region and the non-pattern region are visually distinguished from each other. Therefore, the refractive index-matching layer 150 is located between each polarizing plate 120 and the transparent conductive layer 130 to compensate for refractive index so as to reduce the difference with the optical transmittance of the optical laminate. Specifically, when a pattern is formed on the transparent conductive layer 130, the pattern region and the non-pattern region should be provided so as not to be visually distinguished. The refractive index of the refractive index-matching layer 150 may be preset to be greater than the refractive index of the protective layer of the polarizing plate 120, and to be less than or equal to the refractive index of the transparent conductive layer 130. The refractive index may be properly selected depending on materials of the polarizing plate 120 and the transparent conductive layer 130, but it is preferable that refractive index is a range of 1.4 to 2.6, and more preferably, may be a range of 1.4 to 2.4. As described above, as the refractive index-matching layer 150 is preset as a preset refractive index, optical loss due to a sharply refractive difference between the polarizing plate 120 and the transparent conductive layer 130 can be prevented. The refractive index-matching layer 150 is not particularly limited as long as it can prevent the sharply refractive difference between the polarizing plate 120 and the transparent conductive layer 130. For example, the refractive index-matching layer 150 may be formed from refractive index-matching layer formation composition including polymerizable isocyanate compound.

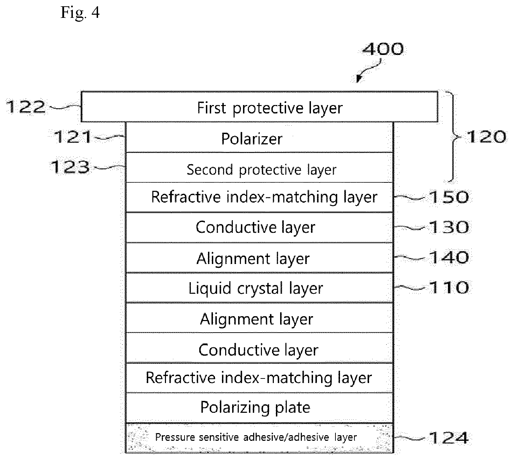

FIG. 4 is a view showing a laminating structure of a transmittance variable optical laminate in which a pressure sensitive adhesive/adhesive according to another embodiment of the present disclosure is formed on one surface thereof.

According to the embodiment of FIG. 4, the optical laminate 400 may include a pressure sensitive adhesive/adhesive layer 124 on one surface of the optical laminate 300 according to the embodiment of FIG. 3.

The pressure sensitive adhesive/adhesive layer 124 may be formed using an adhesive or a pressure sensitive adhesive, and have appropriate pressure sensitive adhesion/adhesion to prevent peeling, bubbles, etc. from occurring when handling the optical laminate 400, and preferably have transparency and thermal stability.

The adhesive may adopt an adhesive developed before or later, for example, may use photocurable adhesive.

The photocurable adhesive provides strong adhesion by being crosslinked and cured by receiving active energy rays such as ultraviolet (UV), electron beam (EB), etc., and may be composed of reactive oligomers, reactive monomers, photopolymerization initiators, and the like.

The reactive oligomers are important components that determine the properties of adhesive, and form polymer binding by photopolymerization to form a cured film. For example, the available oligomers may be polyester-based resin, polyether-based resin, polyurethane-based resin, epoxy-based resin, polyacryl-based resin, silicon-based resin, and the like.

The reactive monomers may serve as crosslinker, diluent of the reactive oligomers described above, and affect adhesion characteristics. For example, the available reactive monomers may be monofunctional monomers, multifunctional monomers, epoxy-based monomers, vinyl ethers, cyclic ethers, and the like.

The photopolymerization initiators may absorb light energy to generate radicals or cations to initiate photopolymerization, and a proper kind may be selected and used depending on photopolymerization resin.

The pressure sensitive adhesive may use a pressure sensitive adhesive developed before or later. According to one or a plurality of embodiments, as the pressure sensitive adhesive, acrylic-based pressure sensitive adhesive, rubber-based pressure sensitive adhesive, silicon-based pressure sensitive adhesive, urethane-based pressure sensitive adhesive, polyvinyl alcohol-based pressure sensitive adhesive, polyvinyl pyrrolidone-based pressure sensitive adhesive, polyacrylamide-based pressure sensitive adhesive, cellulose-based pressure sensitive adhesive, vinylalky ether-based pressure sensitive adhesive and the like. The pressure sensitive adhesive is not particularly limited as long as it has pressure sensitive adhesion and viscoelasticity. In an aspect of ease of acquisition, preferably, the pressure sensitive adhesive may include acrylic-based pressure sensitive adhesive, for example, may be (meth) acrylate copolymers, crosslinkers, solvents, and the like.

The crosslinkers may adopt crosslinkers developed before or later and, for example, polyisocyanate compounds, epoxy resins, melamine resins, urea resins, dialdehydes, methylol polymers, etc., and may preferably include polyisocyanate compounds.

The solvents may include common solvents used in the field of resin compositions. For example, the solvents may use solvents such as: alcohol-based compounds such as methanol, ethanol, isopropanol, butanol, propylene glycol methoxy alcohol, and the like; ketone-based compounds such as methyl ethyl ketone, methyl butyl ketone, methyl isobutyl ketone, diethyl ketone, dipropyl ketone, and the like; acetate-based compounds such as methyl acetate, ethyl acetate, butyl acetate, propylene glycol methoxy acetate, and the like; cellosolve-based compounds such as methyl cellosolve, ethyl cellosolve, propyl cellosolve, etc.; hydrocarbon-based compounds such as hexane, heptane, benzene, toluene, xylene, and the like. The solvents may be used along or combination of two or more kinds.

The thickness of the pressure sensitive adhesive/adhesive layer may be appropriately determined depending on a kind of resins serving as the pressure sensitive adhesive/adhesive, the strength of the pressure sensitive adhesive/adhesive, the environment where the pressure sensitive adhesive/adhesive is used, and the like. According to an embodiment, the pressure sensitive adhesive/adhesive layer may have a thickness of 0.01µm to 50µm in order to ensure sufficient adhesion and minimize the thickness of the optical laminate and, preferably, may have a thickness of 0.05µm to 20µm and, more preferably, may have a thickness of 0.1µm to 10µm.

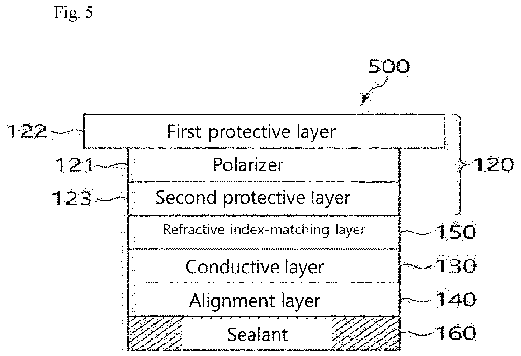

FIG. 5 is a view showing a laminate structure of a transmittance variable optical laminate 500 to which a second layer is coupled according to another embodiment of the present disclosure.

According to the embodiment of FIG. 5, an optical laminate 500 may include the liquid crystal layer (not shown), the polarizing plate 120, the conductive layer 130, the alignment layer 140, the refractive index-matching layer 150, and the sealant layer 160 formed at an outer portion of the liquid crystal layer. The polarizing plate 120 may include the polarizer 121, the first protective layer 122, and the second protective layer 123. The sealant layer 160 is provided to couple the two different polarizing plates to each other, and may be located at an inactivate region, between the two different polarizing plates. Furthermore, the sealant layer 160 may secure a space where the liquid crystal layer is provided between the two different polarizing plates with the spacer.

The sealant layer 160 may include curable resins as base resins. As the base resins, UV curable resins or heat curable resins that are known to be usable for sealants in the art may be used. The ultraviolet curable resins may be polymers of UV curable monomers. The heat curable resins may be polymers of heat curable monomers.

As the base resins of the sealant, for example, acrylate-based resins, epoxy-based resins, urethane-based resins, phenol-based resins, or compounds of these resins. According to an embodiment, the base resins may be acrylate-based resins, and the acrylate-based resins may be polymers of acrylic monomers. For example, the acrylic monomers may be multifunctional acrylate. According to another embodiment, the sealant may include monomer substances in addition to the base resins. For example, the monomer substances may be monofunctional acrylate. In the specification, the monofunctional acrylate may mean compounds having one acryl group, and the multifunctional acrylate may mean compounds having two or more acryl group. The curable resins may be cured by UV irradiation and/or heating. The UV irradiation condition or heat condition may be performed appropriately within the scope that does not damage the objective of the present disclosure. In case of need, the sealant may include initiators, for example, optical initiators or heat initiators.

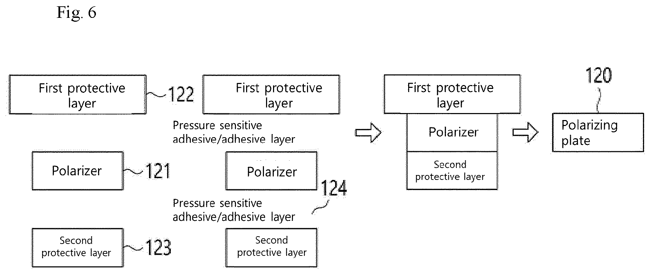

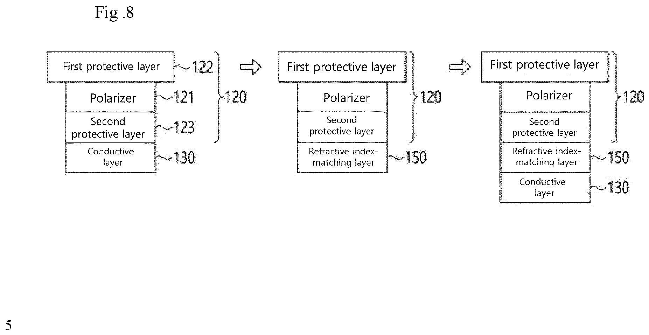

FIG. 6 is a view schematically showing steps of manufacturing a polarizing plate according an embodiment of the present disclosure. According to the embodiment of FIG. 8, the polarizing plate 120 may include the first protective layer 122 and the second protective layer 123 on a first surface and a second surface based on the polarizer 121 as the center.

The first protective layer 122 and the second protective layer 123 may be coupled to the polarizer 121 by using the pressure sensitive adhesive/adhesive 124. The pressure sensitive adhesive/adhesive 124 is not particularly limited as long as it has appropriate pressure sensitive adhesion/adhesion, transparency, and thermal stability and, for example, the pressure sensitive adhesive/adhesive 124 may be substantially the same as the pressure sensitive adhesive/adhesive 124 described above.

The bonding method of the polarizer 121 and the first and second protective layers 122 and 123 by using the pressure sensitive adhesive/adhesive 124 may be performed by a bonding method commonly used in the art. For example, there may be provided a method in which a pressure sensitive adhesive/adhesive composition is applied to a bonding surface of the polarizer or the protective layer by using a flexibility method, Mayer bar coating method, Gravure coating method, die coating method, dip coating method, spray coating method, etc., and then the polarizer or the protective layer is inserted into a niff roll, etc. to be bonded.

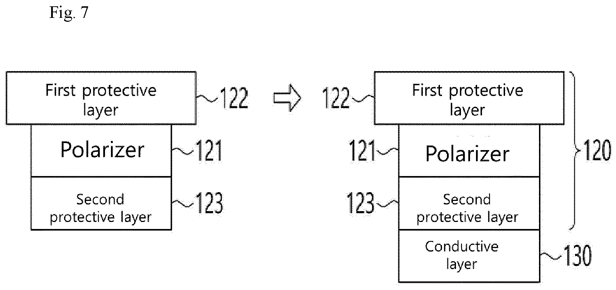

FIG. 7 is a view schematically showing a process of forming the transmittance variable optical laminate by forming a transparent conductive layer on the polarizing plate according to the embodiment of the present disclosure. According to the embodiment of FIG. 7, the transparent conductive layer 130 may be directly formed on the polarizing plate 120. At this point, the polarizing plate 120 may include the first protective layer 122 and/or the second protective layer 123 as described above, and the second protective layer 123 may be used as a substrate of the transparent conductive layer 130 formed in the optical laminate. The transparent conductive layer 130 is not particularly limited as long as it has optical transparency and conductivity and, for example, may be substantially the same as the transparent conductive layer 130 in FIG. 1 as described above.

FIG. 8 is a view schematically showing a process of forming a transmittance variable optical laminate to which a second layer is coupled according to another embodiment of the present disclosure. According to the embodiment of FIG. 8, after the refractive index-matching layer 150 is formed on the polarizing plate 120 including the polarizer 121, the first protective layer 122, and the second protective layer 123, the transparent conductive layer 130 may be laminated thereon. The refractive index-matching layer 150 is not particularly limited as long as it can compensate the difference in transmittance of the optical laminate and correct a color caused from the transparent conductive layer. For example, the refractive index-matching layer 150 may be substantially the same as the refractive index-matching layer 150 in FIG. 3 as described above. The refractive index-matching layer 150 may be formed on the second protective layer 123 of the polarizing plate 120.

The transparent conductive layer 130 and the refractive index-matching layer 150 may be formed in a forming method commonly used in the art and, for example, may be formed using a coating process such as a spin coating method, a roller coating method, a bar coating method, a dip coating method, Gravure coating method, a curtain coating method, a dye coating method, a spray coating method, a doctor coating method, a kneader coating method, etc.; a printing process such as a screen printing method, a spray printing method, an inkjet printing method, a letterpress method, an intaglio printing method, a lithography method, etc.; and a deposition process such as chemical vapor deposition (CVD), physical vapor deposition (PVD), plasma enhanced chemical vapor deposition (PECVD), etc.

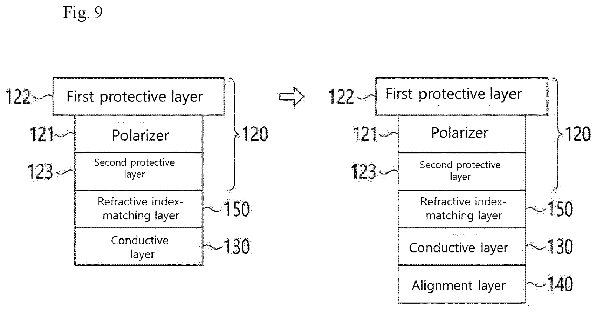

FIG. 9 is a view schematically showing a process of forming a transmittance variable optical laminate to which a second layer is coupled according to another embodiment of the present disclosure. According to the embodiment of FIG. 9, the alignment layer 140 may be laminated on the polarizing plate 120 including the polarizer 121, the first protective layer 122, and the second protective layer 123, the refractive index-matching layer 150, and the conductive layer 130.

The alignment layer 140 is not particularly limited as long as it can provide orientation to a liquid crystal and, for example, the alignment layer 140 may be substantially the same as the alignment layer 140 in FIG. 2 described above.

The alignment layer 140 is formed by applying and curing the alignment layer coating composition on the transparent conductive layer 130, and then the composition for liquid crystal coating is applied and cured on the alignment layer 140, so that the polarizing plate including the liquid crystal layer may be formed on the alignment layer.

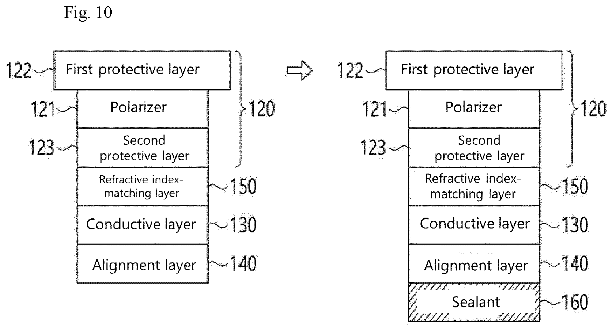

FIG. 10 is a view schematically showing a process of forming a transmittance variable optical laminate to which a second layer is coupled according to another embodiment of the present disclosure. According to the embodiment FIG. 10, the sealant layer 160 formed at the outer portion of the liquid crystal layer may be formed on the polarizing plate 120 including the polarizer 121, the first protective layer 122, and the second protective layer 123, the refractive index-matching layer 150, the conductive layer 130, and the alignment layer 140. The sealant layer 160 is not particularly limited as long as it can couple the two different polarizing plates to each other and protect the liquid crystal layer from the external space and, for example, the sealant layer 160 may be substantially the same as the sealant layer 160 of FIG. 5 described above.

The sealant layer 160 may be formed in a method commonly used in the art and, for example, may be formed drawing a sealant at an outer portion of the liquid crystal layer (i.e., inactivate region) with a dispenser having a nozzle. Then, the optical laminate of the present disclosure may be manufactured by bonding and curing the optical laminate, etc. of FIG. 9, and curing of the sealant may be performed in an UV irradiation and/or heating method.

Furthermore, in addition to the transmittance variable optical laminate, the present disclosure includes a smart window including the same. Furthermore, the present disclosure includes a vehicle in which the smart window is applied to at least one of front windows, rear windows, side windows, sunroof windows, and inner partitions, and a building window including the smart window.

## Claims

1. A transmittance variable optical laminate comprising: a polarizing plate laminated on each of opposite surfaces of a liquid crystal layer located therebetween, the liquid crystal layer being operated in response to an electric field,
wherein the polarizing plate comprises a polarizer, and a first protective layer having length longer than the polarizer and laminated on a first surface of the polarizer and a second protective layer laminated on a second surface of the polarizer,
a transparent conductive layer is formed by directly contacting with the polarizing plate, and
total light transmittance of the optical laminate is variable in response to voltage application.

2. The transmittance variable optical laminate of claim 1, wherein the first protective layer is provided at an outer portion of the polarizer.

3. The transmittance variable optical laminate of claim 1, wherein last ends of two different first protective layers respectively included in the polarizing plate and another polarizing plate laminated on the opposite surfaces of the liquid crystal layer are sealed.

4. The transmittance variable optical laminate of claim 1, wherein the first protective layer includes thermoplastic resin.

5. The transmittance variable optical laminate of claim 4, wherein the thermoplastic resin comprises one or more kinds selected from a group consisting of polyester-based resin, cellulose-based resin, polycarbonate-based resin, acryl-based resin, styrene-based resin, polyolefin-based resin, vinyl chloride-based resin, amide-based resin, imide-based resin, sulfone-based resin, polyethersulfone-based resin, polyether ether ketone-based resin, polyphenylene sulfide-based resin, vinyl alcohol-based resin, vinylidene chloride-based resin, vinyl butyral-based resin, arylate-based resin, polyoxymethylene-based resin, and epoxy-based resin.

6. The transmittance variable optical laminate of claim 1, wherein the first protective layer has a thickness less than or equal to 80µm.

7. The transmittance variable optical laminate of claim 1, further comprising:
a coating layer formed on at least one surface of the first protective layer.

8. The transmittance variable optical laminate of claim 1, wherein the second protective layer is a protective film or an optical functional film.

9. The transmittance variable optical laminate of claim 8, wherein the optical functional film is a retardation film.

10. The transmittance variable optical laminate of claim 1, wherein the transparent conductive layer is formed by directly contacting with the polarizing plate without a separate substrate between the polarizing plate and the transparent conductive layer.

11. The transmittance variable optical laminate of claim 1, wherein the transparent conductive layer is formed by directly contacting with the polarizing plate with a highly adhesive layer between the polarizing plate and the transparent conductive layer.

12. The transmittance variable optical laminate of claim 1, wherein the transparent conductive layer comprises one or more kinds selected from a group consisting of transparent conductive oxide, metal, carbonaceous matters, conductive polymers, conductive ink, and nanowires.

13. The transmittance variable optical laminate of claim 1, further comprising:
a refractive index-matching layer having a refractive index of 1.4 to 2.6.

14. The transmittance variable optical laminate of claim 1, wherein the polarizing plate has a thickness of 30 to 200µm.

15. The transmittance variable optical laminate of claim 1, wherein the liquid crystal layer is driven by any one driving method selected from a group consisting of twisted nematic), super-twisted nematic, in-plane switching, fringe field switching, plane line switching, advanced high-performance IPS (AH-IPS), polymer sustained alignment , and vertical alignment.

16. The transmittance variable optical laminate of claim 1, wherein the liquid crystal layer comprises one or more kinds selected from a group consisting of a ball spacer and a column spacer.

17. The transmittance variable optical laminate of claim 16, wherein the ball spacer has a diameter of 1 to 10 µm.

18. The transmittance variable optical laminate of claim 16, wherein the ball spacer has an occupancy area in the liquid crystal layer of 0.01% to 10% of the area of the liquid crystal layer.

19. A method for manufacturing a transmittance variable optical laminate of any one of claims 1 to 18.

20. A smart window comprising a transmittance variable optical laminate of any one of claims 1 to 18.

21. A vehicle in which a smart window of claim 20 is applied to at least one of a front window, a rear window, a side window, a sunroof window, and an inner partition thereof.

22. A window and a door for a building, the window and the door comprising a smart window of claim 20.
